# EUROPEAN PATENT SPECIFICATION

(11) **EP 4 376 550 B1**
(45) Date of publication and mention of the grant of the patent: **22.10.2025**
(21) Application number: 23163231.6
(22) Date of filing: 21.03.2023
(51) Int. Cl.: H05B 45/10, H05B 47/115, H05B 47/19

(54) **LIGHTING DEVICE HAVING INTELLIGENT PREDICTING FUNCTION AND LIGHTING SYSTEM HAVING THE SAME**
BELEUCHTUNGSVORRICHTUNG MIT INTELLIGENTER VORHERSAGEFUNKTION UND BELEUCHTUNGSSYSTEM DAMIT
DISPOSITIF D'ÉCLAIRAGE AYANT UNE FONCTION DE PRÉDICTION INTELLIGENTE ET SYSTÈME D'ÉCLAIRAGE LE COMPRENANT

(30) Priority: 24.11.2022 CN 202211486234
(43) Date of publication of application: 29.05.2024
(73) Proprietor: Xiamen PVTECH Co., Ltd., Xiamen Fujian 361101 (CN)
(72) Inventor: Lu, Fuxing, Xiamen, 361101 (CN); Liu, Chun Ming, Xiamen, 361101 (CN)
(74) Representative: Lang, Christian

(56) References cited:
- WO-A1-2009/003279
- WO-A1-2012/061709
- WO-A1-2015/184264
- WO-A2-2010/116283

## Description

### TECHNICAL FIELD

The present invention relates to a lighting device, in particular to a lighting device having intelligent predicting function. The present invention further relates to a lighting system including the lighting device.

### BACKGROUND

With advance of technology, lighting technology with intelligent sensing function is becoming more and more popular. Currently, lighting devices can be integrated with various applications (APPs) and wireless controlling technologies (such as ZigBee, WIFI, Bluetooth, NFC, etc.) in order to provide different functions.

However, the intelligent sensing functions of currently available lighting devices still have many shortcomings to be improved. For example, the controller of a currently available lighting device can detect a user approaching the lighting device through a motion sensor (such as a microwave sensor, infrared sensor, laser sensor, etc.) and turn on the light source of the lighting device so as to provide the lighting function. However, the user can still perceive the process of switching the lighting device from the off state to the on state. Therefore, the currently available lighting device with intelligent sensing function still cannot turn on the light source of the lighting device in advance before the user reaches the lighting range of the lighting device.

In addition, the currently available lighting devices with intelligent sensing function also lack the function of detecting the ambient illuminance, so the energy consumption of these lighting devices cannot be effectively reduced.

Patent application publication WO 2010/116283 A2 discloses a lighting device having the features of the preamble of claim 1.

### SUMMARY

The present invention relates to a lighting device according to the appended claim 1. Further features of the lighting device are disclosed in the dependent claims.

One embodiment of the present invention provides a lighting device having intelligent predicting function, which includes a driving module, a light source and an intelligent predicting control module. The light source is connected to the driving module. The intelligent predicting control module is connected to the driving module and communicates with an intelligent predicting sensing device disposed at a position away from the intelligent predicting control module. The intelligent predicting sensing device detects a moving object to generate a first sensing signal and transmits the first sensing signal to the intelligent predicting control module, such that the intelligent predicting control module turns on the light source via the driving module.

In one embodiment, the lighting device further includes an ambient light sensing module. The ambient light sensing module is connected to the intelligent predicting control module and generates an ambient light sensing signal. The intelligent predicting control module adjusts the brightness of the light source according to the ambient light sensing signal. Another intelligent predicting sensing device detects the moving object to generate a second sensing signal and transmits the second sensing signal to the intelligent predicting control module. The intelligent predicting control module calculates a delay time according to the moving speed of the moving object and turn off the light source via the driving module after the delay time passes

In one embodiment, the lighting device further includes a low-voltage power source module connected to the driving module, the intelligent predicting control module and the intelligent predicting sensing device. The driving module powers the low-voltage power source module. The low-voltage power source module powers the intelligent predicting control module and the intelligent predicting sensing device.

In one embodiment, the intelligent predicting sensing device includes a predicting sensing module and a power supplying module. The predicting sensing module generates the first sensing signal and the power supplying module powers the predicting sensing module.

Another embodiment of the present invention provides a lighting system having intelligent predicting function, which includes a lighting device and an intelligent predicting sensing device. The lighting device includes a driving module, a light source and an intelligent predicting control module. The light source is connected to the driving module. The intelligent predicting control module connected to the driving module. The intelligent predicting sensing device is disposed at a position away from the lighting device. The intelligent predicting sensing device detects a moving object to generate a first sensing signal and transmits the first sensing signal to the intelligent predicting control module, such that the intelligent predicting control module turns on the light source via the driving module.

In one embodiment, the lighting device further includes an ambient light sensing module. The ambient light sensing module is connected to the intelligent predicting control module and generates an ambient light sensing signal. The intelligent predicting control module adjusts the brightness of the light source according to the ambient light sensing signal.

In one embodiment, the lighting device further includes a low-voltage power source module connected to the driving module, the intelligent predicting control module and the intelligent predicting sensing device. The driving module powers the low-voltage power source module. The low-voltage power source module powers the intelligent predicting control module and the intelligent predicting sensing device.

In one embodiment, the intelligent predicting sensing device includes a predicting sensing module and a power supplying module. The predicting sensing module generates the first sensing signal and the power supplying module powers the predicting sensing module.

In one embodiment, another intelligent predicting sensing device detects the moving object to generate a second sensing signal and transmits the second sensing signal to the intelligent predicting control module. The intelligent predicting control module calculates a delay time according to the moving speed of the moving object and turn off the light source via the driving module after the delay time passes.

The lighting system having intelligent predicting function in accordance with the embodiments of the present invention may have the following advantages:
(1) In one embodiment of the present invention, the lighting system includes a plurality of lighting devices and a plurality of intelligent predicting sensing devices. Any one of the lighting devices includes an intelligent predicting control module to communicate with any one of the intelligent predicting sensing devices in order to product the intelligent predicting function. Thus, when any one of the intelligent predicting sensing devices detects a moving object (e.g., a person) to generate a first sensing signal, the intelligent predicting sensing device can transmit the first sensing signal to the intelligent predicting control module of the lighting device corresponding thereto so as to turn on the light source of the lighting device in advance. Therefore, the user cannot perceive the process of switching this lighting device from the off state to the on state, such that the light source of this lighting device can be turned on before the user reaches the lighting range thereof.
(2) In one embodiment of the present invention, the lighting system includes a plurality of lighting devices and a plurality of intelligent predicting sensing devices. Any one of the lighting devices has the intelligent predicting function. Accordingly, the user cannot perceive the process of switching the lighting device from the off state to the on state, such that the light source of this lighting device can be turned on before the user reaches the lighting range thereof. Therefore, the design of the lighting system can improve the user experience.
(3) In one embodiment of the present invention, any one of the intelligent predicting sensing devices of the lighting system can detect the moving object to generate a second sensing signal and transmit the second sensing signal to the intelligent predicting control module of the lighting device corresponding thereto. Thus, the intelligent predicting control module can calculate a delay time according to the moving speed of the moving object and turn off the light source via the driving module after the delay time passes. In this way, the user does not perceive the process of switching the lighting device form the on state to the off state, which can further improve the user experience.
(4) In one embodiment of the present invention, each of the lighting devices of the lighting system can further include an ambient light sensing module, which can generate an ambient light sensing signal. Therefore, the ambient light sensing module of the lighting device can adjust the brightness of the lighting source of the lighting device according to the ambient light sensing signal. In this way, when the ambient illuminance is high, the brightness of the light source of the lighting device can be decreased, which can significantly reduce the energy consumption of the lighting device.
(5) In one embodiment of the present invention, the lighting devices and intelligent predicting sensing devices of the lighting system can be connected to one another in order to form a network. Thus, the user can perform various intelligent lighting functions by managing the network. Accordingly, the lighting system can be more comprehensively in use and meet actual requirements.

Further scope of applicability of the present application will become more apparent from the detailed description given hereinafter. However, it should be understood that the detailed description and specific examples, while indicating exemplary embodiments of the present invention, are given by way of illustration only, since various changes and modifications within the scope of the claims are also subject-matter of the present invention and will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention and wherein:
FIG. 1 is a block diagram of a lighting system having intelligent predicting function in accordance with one embodiment of the present invention.
FIG. 2 is a block diagram of a lighting device having intelligent predicting function and an intelligent predicting sensing device in accordance with one embodiment of the present invention.
FIG. 3 is a schematic view of an operational process of the lighting system having intelligent predicting function in accordance with one embodiment of the present invention.
FIG. 4A-FIG. 4E are schematic views of an operational process of a lighting system having intelligent predicting function in accordance with another embodiment of the present invention.
FIG. 5 is a block diagram of a lighting device having intelligent predicting function and an intelligent predicting sensing device in accordance with another embodiment of the present invention.
FIG. 6 is a flow chart of an operational mechanism of the lighting device having intelligent predicting function in accordance with one embodiment of the present invention.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing. It should be understood that, when it is described that an element is "coupled" or "connected" to another element, the element may be "directly coupled" or "directly connected" to the other element or "coupled" or "connected" to the other element through a third element. In contrast, it should be understood that, when it is described that an element is "directly coupled" or "directly connected" to another element, there are no intervening elements.

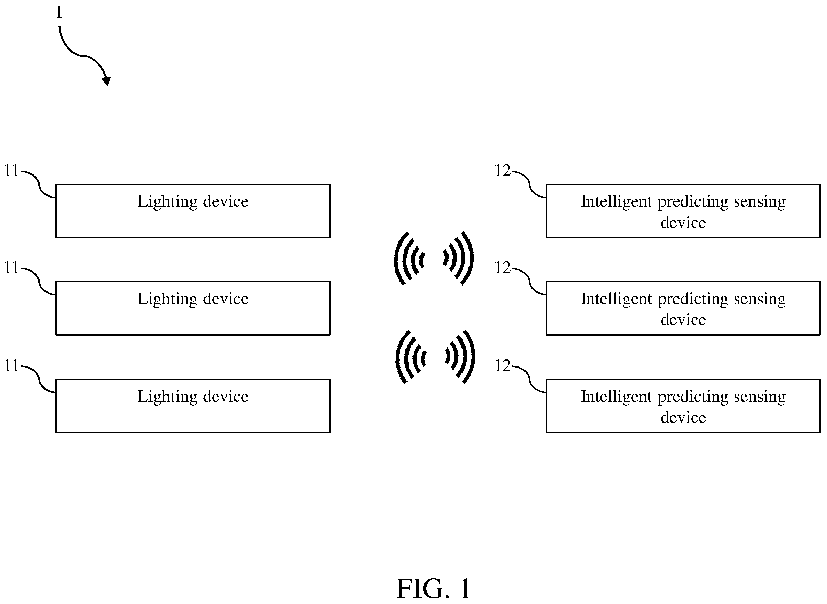

Please refer to FIG. 1, which is a block diagram of a lighting system having intelligent predicting function in accordance with one embodiment of the present invention. As shown in FIG. 1, the lighting system 1 includes a plurality of lighting devices 11 and a plurality of intelligent predicting sensing devices 12. Each of the lighting devices 11 can communicate with one or more of the intelligent predicting sensing devices 12. There is a certain distance between any one of the intelligent predicting sensing devices 12 and any one of the lighting devices 11.

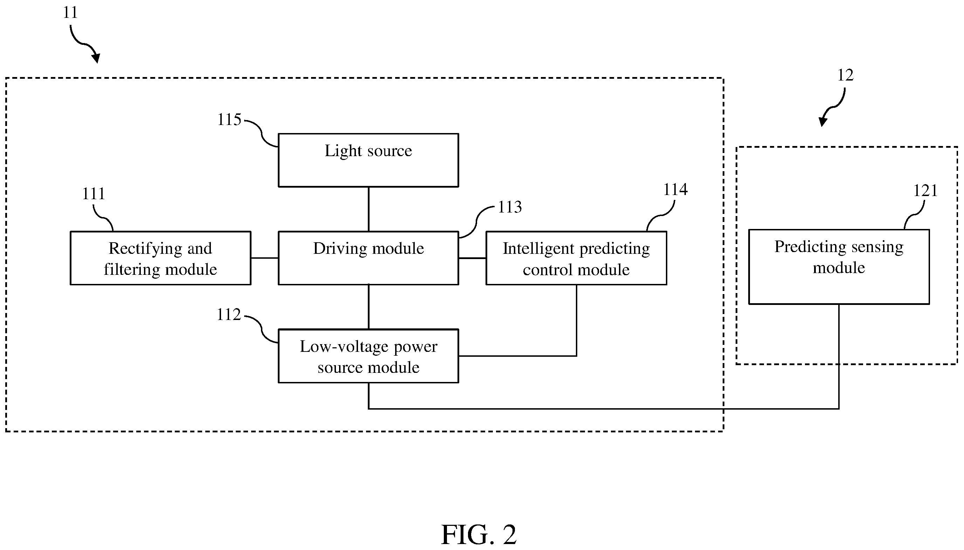

Please refer to FIG. 2, which is a block diagram of a lighting device having intelligent predicting function and an intelligent predicting sensing device in accordance with one embodiment of the present invention. As shown in FIG. 2, the lighting device 11 includes a rectifying and filtering module 111, a low-voltage power source module 112, a driving module 113, an intelligent predicting control module 114 and a light source 115.

The rectifying and filtering module 111 is connected to an external power source (e.g., utility power) and is further connected to the driving module 113 in order to power the driving module 113. In one embodiment, the rectifying and filtering module 111 may include one or more of a rectifying circuit, an EMI circuit, a filtering circuit, a surge protecting circuit, which can power the main circuit of the lighting device 1 so as to make sure that the main circuit can normally operate.

The driving module 113 is connected to the low-voltage power source module 112, the intelligent predicting control module 114 and the light source 115. The driving module 113 powers the low-voltage power source module 112 and the light source 115, and the low-voltage power source module 112 powers the intelligent predicting control module 114. In one embodiment, the driving module 113 may be any one of currently available driving circuits. In one embodiment, the light source 115 may be a light-emitting diode (LED) or other currently available light sources. In one embodiment, the low-voltage power source module 112 may be a safe low-voltage power source or other similar components. In one embodiment, the intelligent predicting control module 114 may be a central-processing unit (CPU), a microcontroller unit (MCU), an application specific integrated circuit (ASIC) or other similar components.

The intelligent predicting sensing devices 12 are disposed to be away from the lighting devices 11. Any one of the lighting devices 11 can wirelessly communicate with the corresponding intelligent predicting sensing device 12 or any one of the intelligent predicting sensing devices 12 via the intelligent predicting control module 114 thereof. In the embodiment, the intelligent predicting sensing device 12 incudes a predicting sensing module 121 connected to the low-power power source module 112, such that the low-voltage power source module 112 can powers the predicting sensing module 121. The predicting sensing module 121 may be a microwave laser module, human body infrared module, RF module or other similar components. In another embodiment, the predicting sensing module 121 may not be connected to the utility power rather than the low-voltage power source module 112. In another embodiment, the lighting device 11 can wiredly communicate with the intelligent predicting sensing device 12 via the intelligent predicting control module 114 thereof.

The predicting sensing module 121 of the intelligent predicting sensing device 12 can generate a first sensing signal after detecting a moving object (e.g., the user) and transmit the first sensing signal to the intelligent predicting control module 114 of the corresponding lighting device 11. Then, the intelligent predicting control module 114 can turn on the light source 115 via the driving module 113. Thus, the user does not perceive the process of switching the lighting device 11 from the off state to the on state. In this way, the lighting device 11 can turn on the light source 115 of the lighting device 11 in advance before the user reaches the lighting range of the lighting device 11, which can significantly improve the user experience.

Similarly, the intelligent predicting sensing device 12 disposed at another position can generate a second sensing signal after detecting the moving object and transmits the second sensing signal to the intelligent predicting control module 114 of the corresponding lighting device 11. In this case, the intelligent predicting control module 114 can calculate a delay time according to the moving speed of the moving object. Afterward, the intelligent predicting control module 114 can turn off the light source 115 via the driving module 13 after the delay time passes. Accordingly, the user does not perceive the process of switching the lighting device 11 form the on state to the off state.

As described above, the lighting system 1 includes a plurality of lighting devices 11 and a plurality of intelligent predicting sensing devices 12. Any one of the lighting devices 11 includes the intelligent predicting control module 114 to communicate with any one of the intelligent predicting sensing devices 12 in order to product the intelligent predicting function. Thus, the user does not perceive the process of switching the lighting device 11 form the off state to the on state. In addition, the intelligent predicting function of the intelligent predicting control module 114 can calculate the delay time according to the moving speed of the moving object in order to estimate the time of the user leaving the lighting range of the lighting device 11. Therefore, the user does not perceive the process of switching the lighting device form the on state to the off state. The intelligent predicting control module 114 of the lighting device 11 can perform the intelligent complex calculation according to the sensing signal and sensitivity of the intelligent predicting sensing devices 12 to control the light source 115 with a view to enhancing the operating performance of the light source 115.

Moreover, the lighting devices 11 and intelligent predicting sensing devices 12 of the lighting system 1 can be connected to one another so as to form a network. As a result, the above intelligent predicting sensing devices 12 can properly turn on or turn off the lighting devices 11. Thus, when the user walks along a path, the path can be always lighted up. Further, the user does not perceive the process of switching the lighting device form the on state to the off state or from the off state to the on state. Moreover, the network can further provide various intelligent control functions via the complex control mechanism with an eye to meeting actual requirements.

The embodiment just exemplifies the present invention and is not intended to limit the scope of the present invention; any equivalent modification and variation within the scope of the claims is also subject-matter of the present invention.

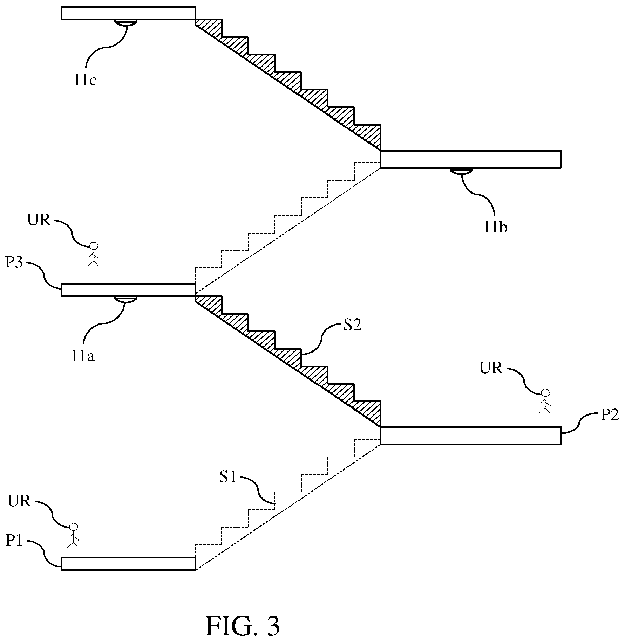

Please refer to FIG. 3, which is a schematic view of an operational process of the lighting system having intelligent predicting function in accordance with one embodiment of the present invention. As shown in FIG. 3, when the user UR is approaching the first lighting device 11a, one of the intelligent predicting sensing devices 12 (not shown in FIG. 3) detects the user UR, and then generates the first sensing signal and transmits the first sensing signal to the lighting device 11a so as to turn on the lighting device 11a in advance. Therefore, when the user UR reaches the landing P1, the lighting device 11a has been in the on state. When the user passes through the flight S1, one of the intelligent predicting sensing devices 12 (not shown in FIG. 3) detects the user UR, and then generates the first sensing signal and transmits the first sensing signal to the lighting device 11b so as to turn on the lighting device 11b in advance. Therefore, when the user UR reaches the landing P2, the lighting device 11b has been in the on state. Similarly, when the user passes through the flight S2, one of the intelligent predicting sensing devices 12 (not shown in FIG. 3) detects the user UR, and then generates the first sensing signal and transmits the first sensing signal to the lighting device 11c so as to turn on the lighting device 11c in advance. Therefore, when the user UR reaches the landing P3, the lighting device 11c has been in the on state. Via the above mechanism, the user does not perceive the process of switching the lighting devices 11a, 11b, 11c from the off state to the on state.

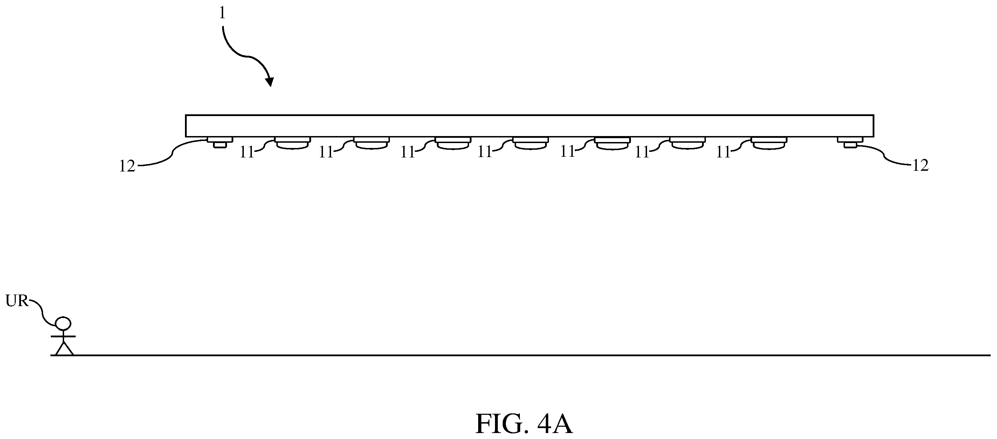

Please refer to FIG. 4A~FIG. 4E, which are schematic views of an operational process of a lighting system having intelligent predicting function in accordance with another embodiment of the present invention respectively. The lighting system 1 includes a plurality of lighting devices 11 and a plurality of intelligent predicting sensing devices 12. As shown in FIG. 4A, the user UR moves toward a path.

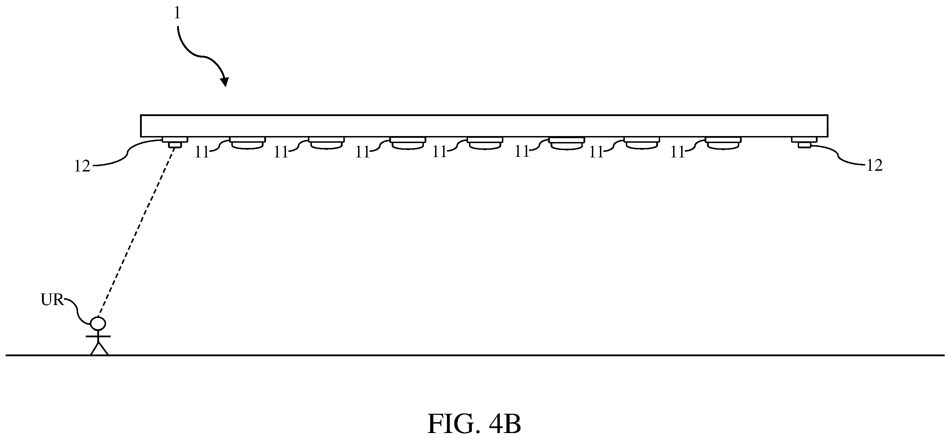

As shown in FIG. 4B, when the user UR is approaching the leftmost intelligent predicting sensing device 12, the intelligent predicting sensing device 12 generates the first sensing signal after detecting the user UR and transmits the first sensing signal to the above lighting devices 11 in order to turn on these lighting devices 11 in advance.

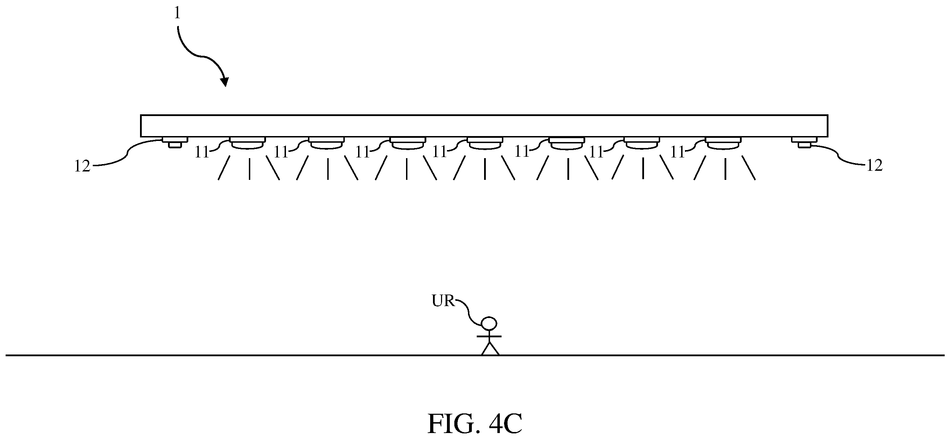

As shown in FIG. 4C, when the user UR keeps moving along the path, the user does not perceive the process of switching the lighting devices 11 from the off state to the on state.

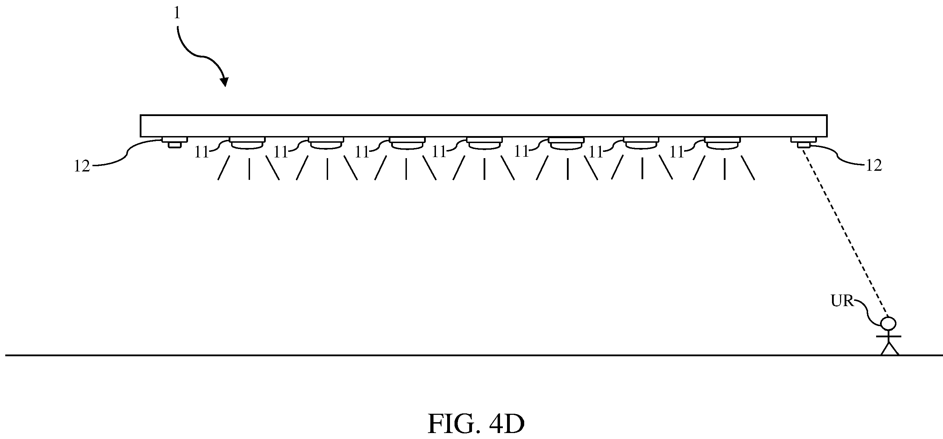

As shown in FIG. 4D, when the user UR is approaching the rightmost intelligent predicting sensing device 12, the intelligent predicting sensing device 12 generates the second sensing signal after detecting the user UR and transmits the second sensing signal to the above lighting devices 11.

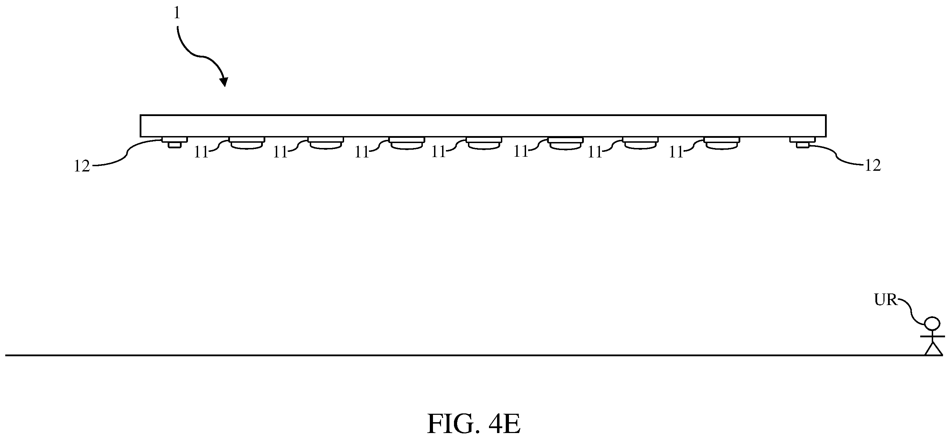

As shown in FIG. 4E, the above lighting devices 11 calculate the delay time according to the moving speed of the user UR. Then, the lighting devices 11 are switched from the on state to the off state after the delay time passes. Similarly, the user does not perceive the process of switching the lighting devices 11 from the on state to the off state.

The embodiment just exemplifies the present invention and is not intended to limit the scope of the present invention; any equivalent modification and variation within the scope of the claims is also subject-matter of the present invention.

It is worthy to point out that the currently available lighting devices cannot turn on the light sources thereof in advance before the user reaches the lighting ranges thereof, so these lighting devices cannot improve the user experience. Besides, these lighting devices also lack the function of detecting the ambient illuminance, so the energy consumptions thereof cannot be effectively reduced.

On the contrary, according to one embodiment of the present invention, the lighting system includes a plurality of lighting devices and a plurality of intelligent predicting sensing devices. Any one of the lighting devices includes an intelligent predicting control module to communicate with any one of the intelligent predicting sensing devices in order to product the intelligent predicting function. Thus, when any one of the intelligent predicting sensing devices detects a moving object (e.g., a person) to generate a first sensing signal, the intelligent predicting sensing device can transmit the first sensing signal to the intelligent predicting control module of the lighting device corresponding thereto so as to turn on the light source of the lighting device in advance. Therefore, the user cannot perceive the process of switching this lighting device from the off state to the on state, such that the light source of this lighting device can be turned on before the user reaches the lighting range thereof.

Also, according to one embodiment of the present invention, the lighting system includes a plurality of lighting devices and a plurality of intelligent predicting sensing devices. Any one of the lighting devices has the intelligent predicting function. Accordingly, the user cannot perceive the process of switching the lighting device from the off state to the on state, such that the light source of this lighting device can be turned on before the user reaches the lighting range thereof. Therefore, the design of the lighting system can improve the user experience.

Further, according to one embodiment of the present invention, any one of the intelligent predicting sensing devices of the lighting system can detect the moving object to generate a second sensing signal and transmit the second sensing signal to the intelligent predicting control module of the lighting device corresponding thereto. Thus, the intelligent predicting control module can calculate a delay time according to the moving speed of the moving object and turn off the light source via the driving module after the delay time passes. **In** this way, the user does not perceive the process of switching the lighting device form the on state to the off state, which can further improve the user experience.

Moreover, according to one embodiment of the present invention, each of the lighting devices of the lighting system can further include an ambient light sensing module, which can generate an ambient light sensing signal. Therefore, the ambient light sensing module of the lighting device can adjust the brightness of the lighting source of the lighting device according to the ambient light sensing signal. In this way, when the ambient illuminance is high, the brightness of the light source of the lighting device can be decreased, which can significantly reduce the energy consumption of the lighting device.

Furthermore, according to one embodiment of the present invention, the lighting devices and intelligent predicting sensing devices of the lighting system can be connected to one another in order to form a network. Thus, the user can perform various intelligent lighting functions by managing the network. Accordingly, the lighting system can be more comprehensively in use and meet actual requirements. As set forth above, the lighting system having intelligent predicting function according to the embodiments of the present invention can definitely achieve great technical effects.

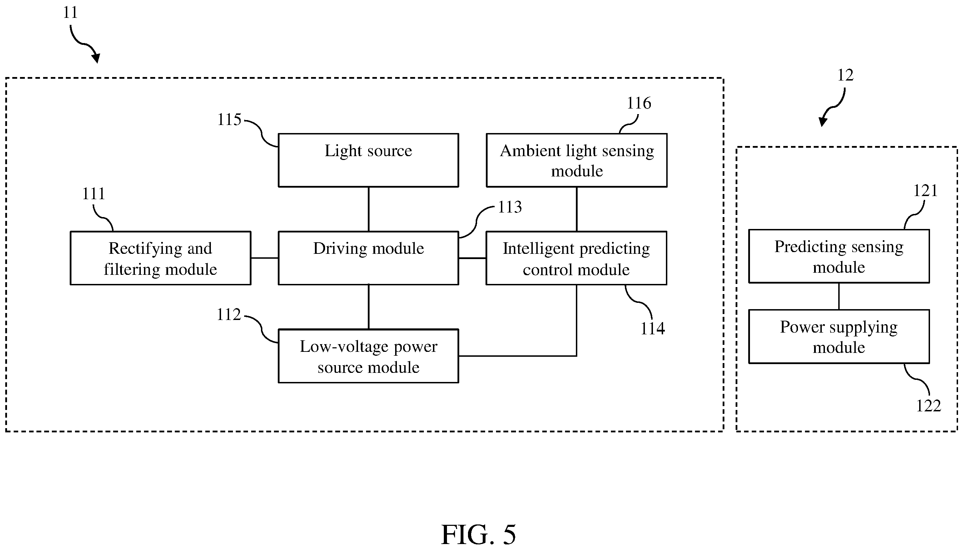

FIG. 5, which is a block diagram of a lighting device having intelligent predicting function and an intelligent predicting sensing device in accordance with another embodiment of the present invention. As shown in FIG. 5, the lighting device 11 includes a rectifying and filtering module 111, a low-voltage power source module 112, a driving module 113, an intelligent predicting control module 114 and a light source 115.

The above elements are similar to the previous embodiment, so will not be described therein again. The difference between this embodiment and the previous embodiment is that the lighting device 11 further includes an ambient light sensing module 116. The ambient light sensing module 116 is connected to the intelligent predicting control module 114 and detects the ambient illuminance (e.g., sunlight) in order to generate an ambient light sensing signal. The intelligent predicting control module 114 adjusts the brightness of the light source 115 according to the ambient light sensing signal. As a result, when the ambient illuminance is high, the brightness of the light source 115 can be reduced so as to decrease the power consumption of the lighting device 11. On the contrary, when the brightness of the ambient illuminance is low, the brightness of the light source 115 can be increased so as to increase the ambient illuminance. The intelligent predicting control module 114 of the lighting device 11 can execute an intelligent complex calculation according to the sensing signal, sensitivity and ambient light sensing signal so as to control the light source 115. Accordingly, the operating performance of the light source 115 can be greatly enhanced.

The intelligent predicting sensing module 12 includes a predicting sensing module 121. The difference between this embodiment and the previous embodiment is that the intelligent predicting sensing device 12 further includes a power supplying module 122. The power supplying module 122 can power the predicting sensing module 121. In one embodiment, the power supplying module 122 may be a rechargeable battery, such as Li battery, NiMH battery or other similar components. Thus, the intelligent predicting sensing device 12 can have the built-in power source, so the intelligent predicting sensing device 12 does not need to be powered by the lighting device 11.

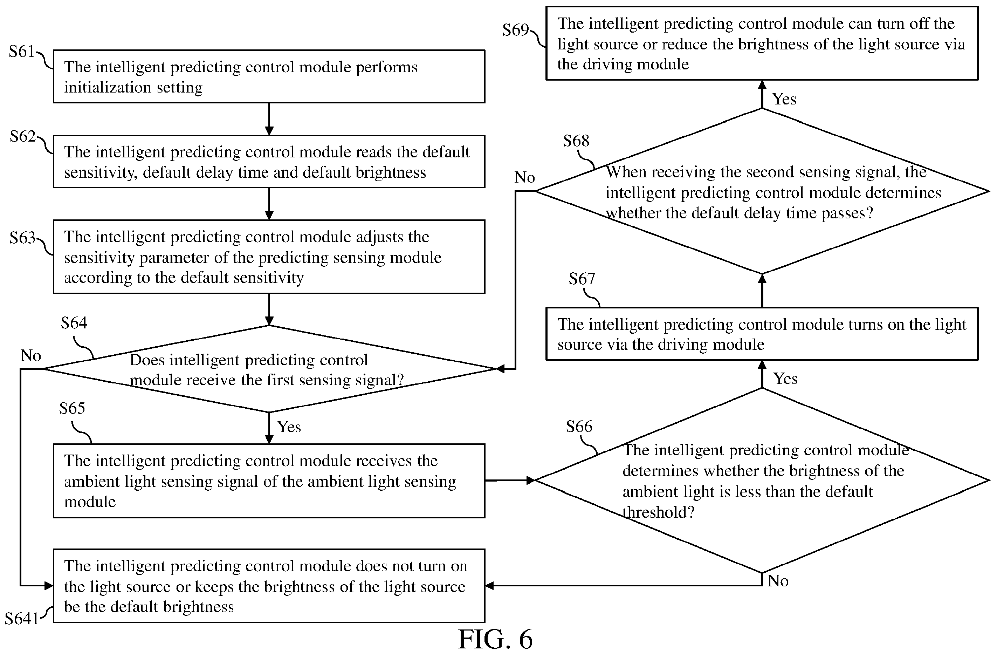

Please refer to FIG. 6, which is a flow chart of an operational mechanism of the lighting device having intelligent predicting function in accordance with one embodiment of the present invention. As shown in FIG. 6, when the lighting device 11 is connected to an external power source, the intelligent predicting control module 114 can perform initialization setting, as shown in Step S61. Next, the intelligent predicting control module 114 reads the default sensitivity, default delay time and default brightness saved in the memory, as shown in Step S62. Then, the intelligent predicting control module 114 adjusts the sensitivity parameter of the predicting sensing module 121 according to the default sensitivity, as shown in Step S63. Afterward, as shown in Step S64, the intelligent predicting control module 114 determines whether the first sensing signal is received or not (the first sensing signal is generated by the intelligent predicting sensing device 12 after the intelligent predicting sensing device 12 detects the user)? If the intelligent predicting control module 114 fails to receive the first sensing signal, the intelligent predicting control module 114 does not turn on the light source 115 or keeps the brightness of the light source 115 be the default brightness, as shown in Step S641. If the intelligent predicting control module 114 receives the first sensing signal, the intelligent predicting control module 114 receives the ambient light sensing signal of the ambient light sensing module 116, as shown in Step S65. Then, as shown in Step S66, the intelligent predicting control module 114 determines whether the brightness of the ambient light is less than the default threshold according to the ambient light sensing signal? If the brightness of the ambient light is not less than the default threshold, the intelligent predicting control module 114 does not turn on the light source 115 or keeps the brightness of the light source 115 to be the default brightness, as shown in Step S641. If the brightness of the ambient light is less than the default threshold, the intelligent predicting control module 114 turns on the light source 115 via the driving module 113, as shown in Step S67. As shown in Step S68, when the intelligent predicting control module 114 receives the second sensing signal of the intelligent predicting sensing device 12 disposed at another position (the second sensing signal is generated by the intelligent predicting sensing device 12 after the intelligent predicting sensing device 12 detects the user), the intelligent predicting control module 114 determines whether the default delay time passes? If the intelligent predicting control module 114 determines that the default delay time has not passed yet, the process returns to Step S64. If the intelligent predicting control module 114 determines that the default delay time has passed, the intelligent predicting control module 114 can determine that the user has left the lighting range of the lighting devicd11. In this case, the intelligent predicting control module 114 can turn off the light source 115 or reduce the brightness of the light source 115 via the driving module 113, as shown in Step S69. In another embodiment, if the lighting device 11 is not provided with the ambient light sensing module 116, the steps related to the ambient light sensing module 116 can be omitted.

The embodiment just exemplifies the present invention and is not intended to limit the scope of the present invention; any equivalent modification and variation within the scope of the claims is also subject-matter of the present invention.

According to one embodiment of the present invention, the lighting system includes a plurality of lighting devices and a plurality of intelligent predicting sensing devices. Any one of the lighting devices includes an intelligent predicting control module to communicate with any one of the intelligent predicting sensing devices in order to product the intelligent predicting function. Thus, when any one of the intelligent predicting sensing devices detects a moving object (e.g., a person) to generate a first sensing signal, the intelligent predicting sensing device can transmit the first sensing signal to the intelligent predicting control module of the lighting device corresponding thereto so as to turn on the light source of the lighting device in advance. Therefore, the user cannot perceive the process of switching this lighting device from the off state to the on state, such that the light source of this lighting device can be turned on before the user reaches the lighting range thereof.

Also, according to one embodiment of the present invention, the lighting system includes a plurality of lighting devices and a plurality of intelligent predicting sensing devices. Any one of the lighting devices has the intelligent predicting function. Accordingly, the user cannot perceive the process of switching the lighting device from the off state to the on state, such that the light source of this lighting device can be turned on before the user reaches the lighting range thereof. Therefore, the design of the lighting system can improve the user experience.

Further, according to one embodiment of the present invention, any one of the intelligent predicting sensing devices of the lighting system can detect the moving object to generate a second sensing signal and transmit the second sensing signal to the intelligent predicting control module of the lighting device corresponding thereto. Thus, the intelligent predicting control module can calculate a delay time according to the moving speed of the moving object and turn off the light source via the driving module after the delay time passes. In this way, the user does not perceive the process of switching the lighting device form the on state to the off state, which can further improve the user experience.

Moreover, according to one embodiment of the present invention, each of the lighting devices of the lighting system can further include an ambient light sensing module, which can generate an ambient light sensing signal. Therefore, the ambient light sensing module of the lighting device can adjust the brightness of the lighting source of the lighting device according to the ambient light sensing signal. In this way, when the ambient illuminance is high, the brightness of the light source of the lighting device can be decreased, which can significantly reduce the energy consumption of the lighting device.

Furthermore, according to one embodiment of the present invention, the lighting devices and intelligent predicting sensing devices of the lighting system can be connected to one another in order to form a network. Thus, the user can perform various intelligent lighting functions by managing the network. Accordingly, the lighting system can be more comprehensively in use and meet actual requirements.

It will be apparent to those skilled in the art that various modifications and variations can be made to the disclosed embodiments. It is intended that the specification and examples be considered as exemplary only, with a true scope of the present invention being indicated by the following claims.

## Claims

1. A lighting device (11) having intelligent predicting function, comprising:
a driving module (113);
a light source (115) connected to the driving module (113)
**characterized by**
an intelligent predicting control module (114) connected to the driving module (113) and configured to communicate with an intelligent predicting sensing device (12) disposed at a position away from the intelligent predicting control module (114),
wherein the intelligent predicting sensing device (12) is configured to detect a moving object to generate a first sensing signal and transmit the first sensing signal to the intelligent predicting control module (114), wherein the intelligent predicting control module (114) is configured to turn on the light source (115) via the driving module (113),
wherein the intelligent predicting control module (114) is configured to communicate with a second intelligent predicting sensing device (12) configured to detect the moving object to generate a second sensing signal and to transmit the second sensing signal to the intelligent predicting control module (114), wherein the intelligent predicting control module (114) is configured to calculate a delay time according to a moving speed of the moving object and turn off the light source via the driving module (113) after the delay time passes.

2. The lighting device (11) having intelligent predicting function as claimed in claim 1, further comprising an ambient light sensing module (116) connected to the intelligent predicting control module (114) and configured to generate an ambient light sensing signal, wherein the intelligent predicting control module (114) adjusts a brightness of the light source (115) according to the ambient light sensing signal.

3. The lighting device (11) having intelligent predicting function as claimed in claim 1, further comprising a low-voltage power source module (112) connected to the driving module (113), the intelligent predicting control module (114) and the intelligent predicting sensing device (12), wherein the driving module (113) is configured to power the low-voltage power source module (112), and the low-voltage power source module (112) is configured to power the intelligent predicting control module (114) and the intelligent predicting sensing device (12).

4. The lighting device (11) having intelligent predicting function as claimed in claim 1, wherein the intelligent predicting sensing device (12) comprises a predicting sensing module (121) configured to generate the first sensing signal and a power supplying module (122) configured to power the predicting sensing module (121).

5. A lighting system (1) having intelligent predicting function, comprising:
a lighting device (11) according to claim 1**,** the intelligent predicting sensing device (12) and the second intelligent predicting sensing device.

6. The lighting system (1) having intelligent predicting function as claimed in claim 5, wherein the lighting device (11) further comprises an ambient light sensing module (116) connected to the intelligent predicting control module (114) and configured to generate an ambient light sensing signal, wherein the intelligent predicting control module (114) adjusts a brightness of the light source (115) according to the ambient light sensing signal.

7. The lighting system (1) having intelligent predicting function as claimed in claim 5, wherein the lighting device (11) further comprises a low-voltage power source (112) module connected to the driving module (113), the intelligent predicting control module (114) and the intelligent predicting sensing device (12), wherein the driving module (113) is configured to power the low-voltage power source module (112) and the low-voltage power source module (112) is configured to power the intelligent predicting control module (114) and the intelligent predicting sensing device (12).

8. The lighting system (1) having intelligent predicting function as claimed in claim 5, wherein the intelligent predicting sensing device (12) comprises a predicting sensing module (121) configured to generate the first sensing signal and a power supplying module (122) configured to power the predicting sensing module (121).

9. The lighting system (1) having intelligent predicting function as claimed in claim 5, wherein another intelligent predicting sensing device (12) is configured to detect the moving object to generate a second sensing signal and transmit the second sensing signal to the intelligent predicting control module (121), wherein the intelligent predicting control module (121) is configured to calculate a delay time according to a moving speed of the moving object and turn off the light source (115) via the driving module (113) after the delay time passes.

## Patentansprüche

1. Beleuchtungsvorrichtung (11) mit intelligenter Vorhersagefunktion, welche umfasst:
ein Antriebsmodul (113);
eine Lichtquelle (115), die mit dem Antriebsmodul (113) verbunden ist;
**gekennzeichnet durch**
ein intelligentes Vorhersagesteuermodul (114), das mit dem Antriebsmodul (113) verbunden ist und konfiguriert ist, um mit einer intelligenten Vorhersageerfassungsvorrichtung (12) zu kommunizieren, die an einer von dem intelligenten Vorhersagesteuermodul (114) entfernten Position angeordnet ist, wobei die intelligente Vorhersageerfassungsvorrichtung (12) zur Erkennung eines bewegten Objekts konfiguriert ist, um ein erstes Erfassungssignal zu erzeugen und das erste Erfassungssignal an das intelligente Vorhersagesteuermodul (114) zu übertragen, wobei das intelligente Vorhersagesteuermodul (114) konfiguriert ist, um die Lichtquelle (115) über das Antriebsmodul (113) einzuschalten, wobei das intelligente Vorhersagesteuermodul (114) konfiguriert ist, um mit einer zweiten intelligenten Vorhersageerfassungsvorrichtung (12) zu kommunizieren, die zur Erkennung des bewegten Objekts konfiguriert ist, um ein zweites Erfassungssignal zu erzeugen und das zweite Erfassungssignal an das intelligente Vorhersagesteuermodul (114) zu übertragen, wobei das intelligente Vorhersagesteuermodul (114) konfiguriert ist, um einer Bewegungsgeschwindigkeit des bewegten Objekts entsprechend eine Verzögerungszeit zu berechnen und die Lichtquelle über das Antriebsmodul (113) nach Ablauf der Verzögerungszeit auszuschalten.

2. Beleuchtungsvorrichtung (11) mit intelligenter Vorhersagefunktion nach Anspruch 1, welche ferner ein Umgebungslichterfassungsmodul (116) umfasst, das mit dem intelligenten Vorhersagesteuermodul (114) verbunden ist und zur Erzeugung eines Umgebungslichterfassungssignals konfiguriert ist, wobei das intelligente Vorhersagesteuermodul (114) dem Umgebungslichterfassungssignal entsprechend eine Helligkeit der Lichtquelle (115) einstellt.

3. Beleuchtungsvorrichtung (11) mit intelligenter Vorhersagefunktion nach Anspruch 1, welche ferner ein Niederspannungsstromquellenmodul (112) umfasst, das mit dem Antriebsmodul (113), dem intelligenten Vorhersagesteuermodul (114) und der intelligenten Vorhersageerfassungsvorrichtung (12) verbunden ist, wobei das Antriebsmodul (113) zur Stromversorgung des Niederspannungsstromquellenmoduls (112) konfiguriert ist, und das Niederspannungsstromquellenmodul (112) zur Stromversorgung des intelligenten Vorhersagesteuermoduls (114) und der intelligenten Vorhersageerfassungsvorrichtung (12) konfiguriert ist.

4. Beleuchtungsvorrichtung (11) mit intelligenter Vorhersagefunktion nach Anspruch 1, bei welcher die intelligente Vorhersageerfassungsvorrichtung (12) ein Vorhersageerfassungsmodul (121), das zur Erzeugung des ersten Erfassungssignals konfiguriert ist, und ein Stromversorgungsmodul (122) umfasst, das zur Stromversorgung des Vorhersageerfassungsmoduls (121) konfiguriert ist.

5. Beleuchtungssystem (1) mit intelligenter Vorhersagefunktion, welches umfasst:
eine Beleuchtungsvorrichtung (11) nach Anspruch 1, die intelligente Vorhersageerfassungsvorrichtung (12) und die zweite intelligente Vorhersageerfassungsvorrichtung.

6. Beleuchtungssystem (1) mit intelligenter Vorhersagefunktion nach Anspruch 5, bei welchem die Beleuchtungsvorrichtung (11) ferner ein Umgebungslichterfassungsmodul (116) umfasst, das mit dem intelligenten Vorhersagesteuermodul (114) verbunden ist und zur Erzeugung eines Umgebungslichterfassungssignals konfiguriert ist, wobei das intelligente Vorhersagesteuermodul (114) dem Umgebungslichterfassungssignal entsprechend eine Helligkeit der Lichtquelle (115) einstellt.

7. Beleuchtungssystem (1) mit intelligenter Vorhersagefunktion nach Anspruch 5, bei welchem die Beleuchtungsvorrichtung (11) ferner ein Niederspannungsstromquellenmodul (112) umfasst, das mit dem Antriebsmodul (113), dem intelligenten Vorhersagesteuermodul (114) und der intelligenten Vorhersageerfassungsvorrichtung (12) verbunden ist, wobei das Antriebsmodul (113) zur Stromversorgung des Niederspannungsstromquellenmoduls (112) konfiguriert ist, und das Niederspannungsstromquellenmodul (112) zur Stromversorgung des intelligenten Vorhersagesteuermoduls (114) und der intelligenten Vorhersageerfassungsvorrichtung (12) konfiguriert ist.

8. Beleuchtungssystem (1) mit intelligenter Vorhersagefunktion nach Anspruch 5, bei welchem die intelligente Vorhersageerfassungsvorrichtung (12) ein Vorhersageerfassungsmodul (121), das zur Erzeugung des ersten Erfassungssignals konfiguriert ist, und ein Stromversorgungsmodul (122) umfasst, das zur Stromversorgung des Vorhersageerfassungsmoduls (121) konfiguriert ist.

9. Beleuchtungssystem (1) mit intelligenter Vorhersagefunktion nach Anspruch 5, bei welchem eine weitere intelligente Vorhersageerfassungsvorrichtung (12) zur Erkennung des bewegten Objekts konfiguriert ist, um ein zweites Erfassungssignal zu erzeugen und das zweite Erfassungssignal an das intelligente Vorhersagesteuermodul (121) zu übertragen, wobei das intelligente Vorhersagesteuermodul (121) konfiguriert ist, um einer Bewegungsgeschwindigkeit des bewegten Objekts entsprechend eine Verzögerungszeit zu berechnen und die Lichtquelle (115) über das Antriebsmodul (113) nach Ablauf der Verzögerungszeit auszuschalten.

## Revendications

1. Dispositif d'éclairage (11) présentant une fonction de prédiction intelligente, comprenant :
un module de pilotage (113) ;
une source de lumière (115) connectée au module de pilotage (113) **caractérisé par**
un module de commande de prédiction intelligente (114) connecté au module de pilotage (113) et configuré pour communiquer avec un dispositif de détection de prédiction intelligente (12) disposé à une position éloignée du module de commande de prédiction intelligente (114),
dans lequel le dispositif de détection de prédiction intelligente (12) est configuré pour détecter un objet en mouvement afin de générer un premier signal de détection et de transmettre le premier signal de détection au module de commande de prédiction intelligente (114), dans lequel le module de commande de prédiction intelligente (114) est configuré pour allumer la source de lumière (115) via le module de pilotage (113), dans lequel le module de commande de prédiction intelligente (114) est configuré pour communiquer avec un second dispositif de détection de prédiction intelligente (12) configuré pour détecter l'objet en mouvement afin de générer un second signal de détection et de transmettre le second signal de détection au module de commande de prédiction intelligente (114), dans lequel le module de commande de prédiction intelligente (114) est configuré pour calculer un temps de retard en fonction d'une vitesse de déplacement de l'objet en mouvement et éteindre la source de lumière via le module de pilotage (113) une fois le temps de retard écoulé.

2. Dispositif d'éclairage (11) présentant une fonction de prédiction intelligente selon la revendication 1, comprenant en outre un module de détection de lumière ambiante (116) connecté au module de commande de prédiction intelligente (114) et configuré pour générer un signal de détection de lumière ambiante, dans lequel le module de commande de prédiction intelligente (114) ajuste une luminosité de la source de lumière (115) en fonction du signal de détection de lumière ambiante.

3. Dispositif d'éclairage (11) présentant une fonction de prédiction intelligente selon la revendication 1, comprenant en outre un module de source d'énergie basse tension (112) connecté au module de pilotage (113), au module de commande de prédiction intelligente (114) et au dispositif de détection de prédiction intelligente (12), dans lequel le module de pilotage (113) est configuré pour alimenter le module de source d'énergie basse tension (112), et le module de source d'énergie basse tension (112) est configuré pour alimenter le module de commande de prédiction intelligente (114) et le dispositif de détection de prédiction intelligente (12).

4. Dispositif d'éclairage (11) présentant une fonction de prédiction intelligente selon la revendication 1, dans lequel le dispositif de détection de prédiction intelligente (12) comprend un module de détection de prédiction (121) configuré pour générer le premier signal de détection et un module d'alimentation électrique (122) configuré pour alimenter le module de détection de prédiction (121).

5. Système d'éclairage (1) présentant une fonction de prédiction intelligente, comprenant :
un dispositif d'éclairage (11) selon la revendication 1, le dispositif de détection de prédiction intelligente (12) et le second dispositif de détection de prédiction intelligente.

6. Système d'éclairage (1) présentant une fonction de prédiction intelligente selon la revendication 5, dans lequel le dispositif d'éclairage (11) comprend en outre un module de détection de lumière ambiante (116) connecté au module de commande de prédiction intelligente (114) et configuré pour générer un signal de détection de lumière ambiante, dans lequel le module de commande de prédiction intelligente (114) ajuste une luminosité de la source de lumière (115) en fonction du signal de détection de lumière ambiante.

7. Système d'éclairage (1) présentant une fonction de prédiction intelligente selon la revendication 5, dans lequel le dispositif d'éclairage (11) comprend en outre un module de source d'énergie basse tension (112) connecté au module de pilotage (113), au module de commande de prédiction intelligente (114) et au dispositif de détection de prédiction intelligente (12), dans lequel le module de pilotage (113) est configuré pour alimenter le module de source d'énergie basse tension (112), et le module de source d'énergie basse tension (112) est configuré pour alimenter le module de commande de prédiction intelligente (114) et le dispositif de détection de prédiction intelligente (12).

8. Système d'éclairage (1) présentant une fonction de prédiction intelligente selon la revendication 5, dans lequel le dispositif de détection de prédiction intelligente (12) comprend un module de détection de prédiction (121) configuré pour générer le premier signal de détection et un module d'alimentation électrique (122) configuré pour alimenter le module de détection de prédiction (121).

9. Système d'éclairage (1) présentant une fonction de prédiction intelligente selon la revendication 5, dans lequel un autre dispositif de détection de prédiction intelligente (12) est configuré pour détecter l'objet en mouvement afin de générer un second signal de détection et de transmettre le second signal de détection au module de commande de prédiction intelligente (121), dans lequel le module de commande de prédiction intelligente (121) est configuré pour calculer un temps de retard en fonction d'une vitesse de déplacement de l'objet en mouvement et éteindre la source de lumière (115) via le module de pilotage (113) une fois le temps de retard écoulé.
